# EUROPEAN PATENT SPECIFICATION

(11) **EP 3 655 290 B1**
(45) Date of publication and mention of the grant of the patent: **27.11.2024**
(21) Application number: 18844249.5
(22) Date of filing: 10.08.2018
(51) Int. Cl.: H04N 23/695

(54) **LOW COST CAMERA**
KOSTENGÜNSTIGE KAMERA
CAMÉRA À BAS COÛT

(30) Priority: 10.08.2017 US 201762543421 P
(43) Date of publication of application: 27.05.2020
(73) Proprietor: Gentex Corporation, Zeeland, MI 49464 (US)
(72) Inventor: LEE, Ethan J., Zeeland Michigan 49464 (US); BLAKER, David A., Zeeland Michigan 49464 (US); BOEHM, Neil J., Zeeland Michigan 49464 (US); TONAR, William L., Zeeland Michigan 49464 (US)
(74) Representative: Müller-Boré & Partner Patentanwälte PartG mbB
(86) International application number: PCT/US2018/046274
(87) International publication number: WO 2019/033000

(56) References cited:
- WO-A1-2006/002746
- WO-A1-2013/032165
- FR-A1- 3 041 458
- US-A1- 2012 287 493
- US-A1- 2015 237 326
- US-A1- 2016 107 576
- US-B1- 6 369 954
- US-B1- 9 304 305
- ATSUSHI TAKEI ET AL: "Angle-Tunable Liquid Wedge Prism Driven by Electrowetting", JOURNAL OF MICROELECTROMECHANICAL SYSTEMS, IEEE SERVICE CENTER, US, vol. 16, no. 6, 1 December 2007 (2007-12-01), pages 1537 - 1542, XP011197415, ISSN: 1057-7157, DOI: 10.1109/JMEMS.2007.906074

## Description

### FIELD OF THE INVENTION

The present invention generally relates to imaging systems (cameras) used in vehicles.

FR 3 041 458 A1 describes an imaging device including an image sensor, a lens, a control module designed to trigger a plurality of shots by the image sensor at successive instants, so as to acquire a respective plurality of images having a given spatial resolution, and an analysis module designed to produce a super-resolved image presenting a spatial resolution greater than the given spatial resolution of the separate images.

WO 2006/002746 A1 discloses a shooting method comprising, in response to a shot release: - the capture of a first image, according to a first shooting field, using a camera equipped with a variable focus lens set to a first focal length, - the automatic search in the first image of interest zones, and when at least one interest zone is found, - the automatic modification of the focal length to tighten the shooting field around the interest zone, - the automatic capture of at least one second image according to the tightened shooting field, and - the automatic creation of a composite image by combining the first image and the second image.

US 6 369 954 B1 discloses a variable focus lens comprising a chamber filled with a first liquid, a drop of a second liquid being disposed at rest on a region of a first surface of an insulating wall of the chamber, the first and second liquids being non miscible, of different optical indexes and of substantially same density. The first liquid is conductive and the second liquid is insulating. The lens further comprises means for applying a voltage between the conductor liquid and an electrode placed on the second surface of said wall; and centering means for maintaining the centering of the edge of the drop while the voltage is applied and for controlling the shape thereof.

US 2015/0237326 A1 describes a 3D image capture apparatus that uses digital images of an object from multiple view points, which can be used to generate a 3D image of the object. The apparatus includes an image sensor, a lens adjacent the image sensor, and an active optical component adjacent the lens and opposite the image sensor. An aperture component is located between the active optical component and the lens, and the aperture component has an aperture for allowing passage of light to the image sensor. The active optical component is changeable between first and second shapes. The first shape provides a first optical wavefront through the aperture and lens to the image sensor from a first view angle of an object, and the second shape provides a second optical wavefront through the aperture and lens to the image sensor from a second view angle of the object. The second optical wavefront is shifted by the active optical component on the image sensor with respect to the first optical wavefront in order to provide multiple view-angle images along a single optical channel.

WO 2013/032165 A1 describes a network camera and a photographing method thereof. The network camera includes a lens module comprising a plurality of lenses having incident paths different from each other, a prism reflecting light incident through the lens module, a prism driving module rotating the prism, and a controller controlling the prism through the prism driving module. The prism reflects lights incident through the incident paths different from each other by performing a rotation operation according to a control of the prism driving module.

ATSUSHI TAKEI ET AL: "Angle-Tunable Liquid Wedge Prism Driven by Electrowetting", JOURNAL OF MICROELECTROMECHANICAL SYSTEMS, IEEE SERVICE CENTER, US, vol. 16, no. 6, 1 December 2007 (2007-12-01), pages 1537-1542, ISSN: 1057-7157, DOI: 10.1109/JMEMS.2007.906074 describes a tunable wedge prism by electrowetting actuation. The prism can shift the field of view to the left or to the right and is useful for small cameras and endoscopes because its field of view can be changed without the need for large instruments. It consists of two plates that face each other, and a liquid is sandwiched between them. The liquid and plates form a wedge when the angle between the plates is changed. Electrowetting is used to change the angle between the plates. The wedge prism is small because the liquid driven by electrowetting works as a prism. In addition, the prism produces a clear field of view because its optical flatness is determined by the flatness of the plates.

### SUMMARY OF THE INVENTION

The present invention is defined by independent claim 1. Particular embodiments are defined in the dependent claims.

These and other features, advantages, and objects of the present invention will be further understood and appreciated by those skilled in the art by reference to the following specification, claims, and appended drawings.

### BRIEF DESCRIPTION OF THE DRAWINGS

The present invention will become more fully understood from the detailed description and the accompanying drawings, wherein:
Fig. 1 is a block diagram showing an imaging system according to a first embodiment;
Fig. 2A is a block diagram illustrating use of an electrowetting lens to function with a narrower field of view;
Fig. 2B is a block diagram illustrating use of an electrowetting lens to function with a wider field of view;
Fig. 2C is a block diagram illustrating use of an electrowetting lens to function with a shifted field of view;
Fig. 3A is a top view of a vehicle having a plurality of imaging systems constructed in accordance with the embodiment shown in Fig. 1;
Fig. 3B is a top view of the vehicle shown in Fig. 3A with the fields of view of the cameras altered; and
Fig. 4 is a block diagram showing an imaging system according to a second embodiment.

### DETAILED DESCRIPTION

Automotive cameras are used for a wide variety of functions in a vehicle. Such uses include control of vehicle equipment to supplementing a driver's vision of the environment surrounding the vehicle. Cameras that supplement a driver's vision include rearward-facing cameras such as a camera for a reverse camera display (RCD) system and a camera for a full display mirror (FDM) system. Cameras for RCD systems and FDM systems may be aimed in approximately the same direction but have different fields of view (FOV) and focal points. Thus, in a vehicle that provides both RCD and FDM systems, two cameras have been mounted to the rear of the vehicle with each camera providing images for different ones of the two systems.

Automotive cameras tend to be much lower resolution than consumer products due to reliability requirements. For example, the latest automotive-grade parts are 2MP, with recent announcements of 7.5MP sensors coming in 2018. The reason for the increase in resolution is to handle the NCAP requirements for 2021 in Europe where forward-facing sensors must have enough resolution to see pedestrians at the side of the vehicle and still have enough resolution in the center. A similar problem exists in the rearward direction where requirements of 170 ppi over 50 degrees, with 1600 pixels wide, implies a 24MP sensor necessary for 180° FOV surround system with a standard fixed-focus lens. Thus, digital high definition (HD) cameras have been used to provide these higher resolutions. However, these digital HD cameras require expensive serializer/deserializer pairs and associated connectors (coaxial connectors). As used herein an HD camera/image sensor has a signal to noise ratio of at least about 90dB.

The inventors have discovered that by using a variable focus lens, the wide FOVs desired for some automotive applications can be obtained while using a camera with a lower resolution. Thus, an analog HD camera isused with a variable focus lens. Analog HD cameras provide the benefit of not requiring expensive serializer/deserializer pairs and associated connectors of their digital counterparts. Thus, less expensive twisted pair cables and conventional crimp and snap connector systems may be used. A suitable analog encoder is available from Techpoint Inc. of San Jose, California.

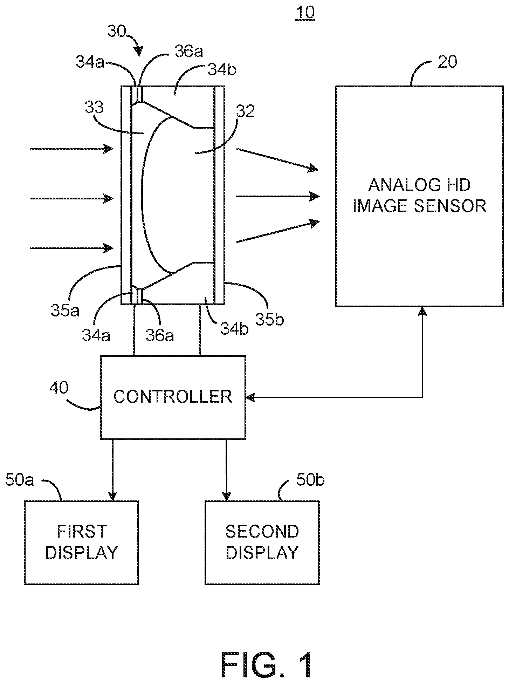

Fig. 1 shows an example of an imaging system 10 having a HD image sensor 20, a variable focus lens such as an electrowetting lens 30 positioned in front of the image sensor 20 and configured to change at least one optical characteristic in response to an electrical stimulus so as to change a field of view of the image sensor 20, and a controller 40 coupled to the variable focus lens 30 and configured to select a field of view of the image sensor 20 by selecting the electrical stimulus to be applied to the variable focus lens 30. The variable focus lens 30 may also be used for auto-focusing.

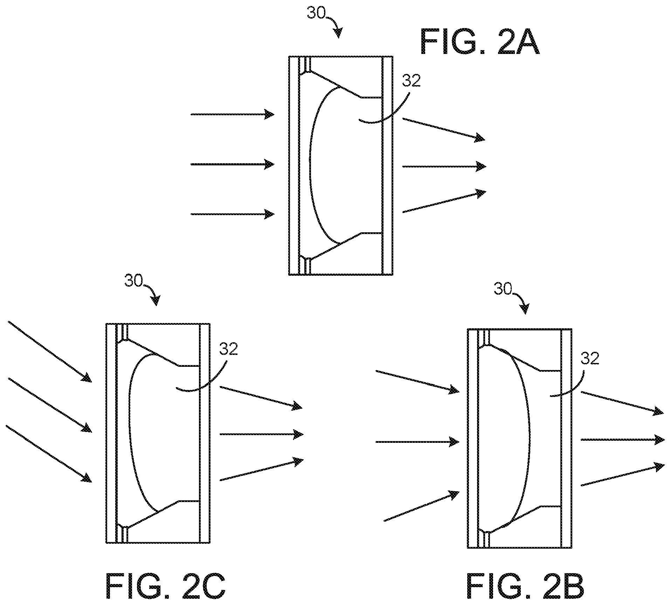

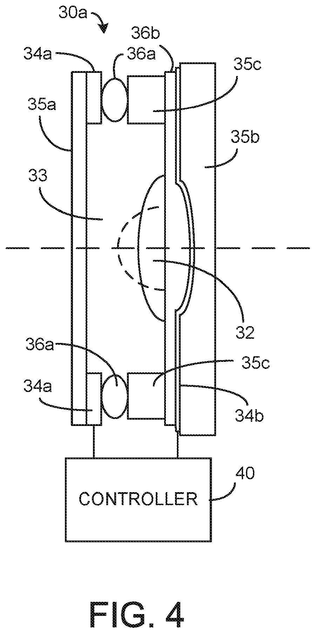

The variable focus lens 30 may take any form known in the art including the forms shown in Figs. 1 and 4. In general, as shown in Fig. 1, the variable focus lens 30 is an electrowetting lens, which includes an oil lens 32 that may take various shapes to form a variable lens in response to the application of an electrical stimulus such as the application of a selected voltage to one or more electrodes 34 within the electrowetting lens 30. The lens 30 may include two glass substrates 35a and 35b that combine with electrodes 34a, 34b and insulating member 36a to form a chamber in which the oil lens 32 is disposed. The remainder of the chamber in which the oil lens 32 is located is filled with another fluid such as water 33 that does not mix with the oil lens 32. Note that the electrode 34b that contacts the oil lens 32 may be coated with an insulator material. Figs. 2A, 2B, and 2C show three examples of the shapes the oil lens 32 may form in response to two different voltages applied to electrodes 34a and 34b. In Fig. 2A, the oil lens 32 takes the shape of a convex glass lens and the electrowetting lens 30 functions as a bi-convex lens. In Fig. 2B, the oil lens 32 takes the shape of a concave glass lens and the electrowetting lens 30 functions as a bi-concave lens. In Fig. 2C, the oil lens 32 takes a tilted or rotated shape so that the electrowetting lens 30 shifts the field of view to one direction (i.e., left, right, up, or down). By changing the shape of oil lens 32, the focal length may be changed as may the direction of the optical axis. When placed in front of an image sensor 20, the electrowetting lens 30 may be used to change the field of view of the image sensor 20 as well as to pan the field of view across the imaging surface of the image sensor 20. Such a capability would provide many advantages in imaging systems used in vehicles as well as in security cameras and mobile devices, such as smartphones, notebooks, and laptop computers.

The electrowetting lens 30a shown in Fig. 4 is similar to that shown in Fig. 1 except that the configuration of electrode 34b is different and rear glass substrate 35b includes a spherical recess with the electrode 34b coated over the entire surface of substrate 35b. An insulating layer 36b is provided across the entire surface of electrode 34b and fills the electrode-coated spherical recess in substrate 35b. Further, an annular glass ring 35c may be provided about the periphery of the chamber between substrates 35a and 35b. In this lens configuration, a drop of oil is centered by a gradient in the electric field applied through electrodes 34a and 34b to form oil lens 32.

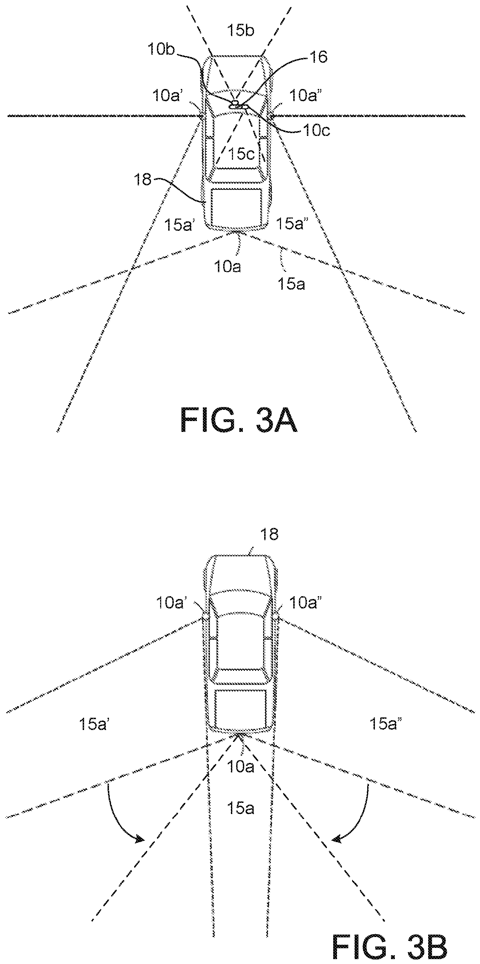

One example of an application for imaging system 10 not encompassed by the claimed invention would be a rear vision camera 10a of a vehicle 18 as shown in Figs. 3A and 3B. In this application, the field of view 15a of the rear vision camera 10a could be dynamically changed without reducing the resolution of the image output from the rear vision camera 10a. For example, the field of view could be shifted to keep the image of any detected vehicle within the image. Further, the field of view could be widened or narrowed as shown in Figs. 3A and 3B depending upon whether the vehicle was in reverse (for RCD) or driving forward (for FDM), or depending upon the forward speed of the vehicle or the type of road upon which the vehicle is traveling. Thus, a single camera may be used for both RCD and FDM applications. Note that the rear vision camera 10a may be located at the rear of the vehicle or at the sides of the vehicle as cameras 10a' and 10a" with respective variable fields of view 15a' and 15a". The images captured by the rear vision cameras 10a, 10a', and 10a" may be displayed on a display located in the rearview mirror 16 or other location in the instrument panel or console. Additionally or alternatively, the images may be processed for use in autonomous vehicle control or a driver assist function, such as parking assist, blind spot detection, rear collision warning, lane departure warning, lane keeping assist, etc.

Another example of a vehicle application for imaging system 10 not encompassed by the claimed invention would be as a forward vision camera 10b as shown in Fig. 3A. Such forward vision cameras 10b may be mounted at or near the rearview mirror 16 to capture images forward of the vehicle through its windshield. Images captured by the forward vision camera 10b may be used for a number of different driver assist functions or autonomous vehicle control functions. For example, the images may be used for headlamp control, lane departure warning, parking assist, adaptive cruise control, lane keeping assist, forward collision warning, object detection, pedestrian detection, and traffic sign recognition. However, it may be desirable to use a wider or narrower field of view 15b for each of these functions so as to limit the information in the captured images to that information that is relevant for the particular function. Accordingly, the provision of the electrowetting lens 30 in a forward vision camera 10b provides the advantage of changing the field of view for a selected function without a loss in resolution. Further, the ability of the electrowetting lens to shift the field of view 15b left or right allows the forward vision camera 10b to look in the direction of an upcoming turn.

When used for headlamp control, the forward vision camera 10b may advantageously maintain a high pixel count per degree of field of view when the field of view is narrowed to focus on distant objects. This allows for more accurate detection of vehicles and other objects at greater distances. Likewise, the field of view may be changed to look ahead in the direction of an upcoming turn so that vehicles on the turn may be detected more quickly and accurately.

Another example of a vehicle application for imaging system 10 according to the claimed invention is an interior vision camera 10c as shown in Fig. 3A. Such interior vision cameras 10c may be mounted at or near the rearview mirror 16, an upper console, or reading light assembly in order to capture images inside the vehicle and display the images to the driver or other occupants. For example, such a camera 10c may be mounted to view back seat passengers and display the images to the driver on a display that may be mounted in the rearview mirror 16 or other location in the instrument panel or console. This is particularly useful if one of the passengers is a baby and even more advantageous if the baby is in a car seat facing rearward. By employing an electrowetting lens in the interior vision camera 10c, the field of view 15c may be shifted around the interior of the vehicle so as to view a particular passenger or location in the vehicle. The field of view 15c may also be widened or narrowed to capture front seat passengers or focus on rear seat passengers. Such a change in the field of view 15c is effectuated by automated control. Automated control may be used for video conferences so as to shift the field of view to whichever vehicle occupant is speaking.

By using the variable focus lens 30 in imaging systems 10 used in a vehicle, one can avoid having to only rely upon digital zooming for changing a field of view, which results in a reduction in the resolution of the images captured by the system. Further, to the extent one intends to avoid this by providing a mechanical zoom lens, such a mechanical zoom lens is much more complex to make and subject to breakage.

If the variable focus lens 30, 30a was oscillated between two or more images or fields of view, a first image stream having a first field of view could be supplied to a first display 50a and a second image stream having a different second field of view may be supplied to a second display 50b and thus two or more different image streams could be captured and displayed in real time. The different image streams could also be displayed in different display areas of one display 50a. Using one camera to collect multiple images is an advantage over using multiple cameras. For example, if the camera was set to oscillate between two images at 30Hz, one could update two different images on two different displays or two different display zones at 15Hz.

The imaging system 10 may also find advantageous application in security cameras, particularly for those applications where two separate image sensors are used to capture retinal images of both a person's eyes. By using the electrowetting lens 30, the field of view may be shifted from one eye to the other and thereby eliminate the need for two separate cameras. Further, the field of view may be initially set to wide to capture a person's face and identify the location of their eyes and then zoom in on each eye. This would make it more practical to implement biometric screening security measures (particularly retinal imaging) in mobile devices, which typically only have one camera aimed in any one direction.

Security cameras having an electrowetting lens with a variable field of view may be used in home security systems as well as in smoke detectors and strobe light fixtures. Similarly, a vehicle camera such as camera 10c may be used for security purposes to scan the irises of the driver prior to starting the vehicle. The imaging system may also be used for scanning of a person's face for a facial recognition system.

Although imaging system 10 is shown as having just an electrowetting lens 30 in front of image sensor 20, additional conventional lenses may be used in combination with the electrowetting lens 30 to obtain the desired fields of view and focus. Further, other forms of variable focus lenses may be used in combination with the HD image sensor 20. An example of an electrowetting lens that may be used is available from Invenios of Santa Barbara, California. Such a lens can provide a 130° FOV for RCD applications and a 50° FOV for FDM applications with crisp images.

It should further be noted that the controller 40 may include various forms of control logic and image processing circuitry. In order to properly handle both FDM and RCD FOVs, a dewarp engine may be provided in controller 40. In order to use an analog HD image sensor 20, one may want to lower the resolution transmitted so that image signal processing (ISP) may be performed in the camera module (HDR reconstruct, windowing, etc.). Therefore, an ISP processor with dewarp, e.g. GEO Semi GW5, may be provided in the camera module portion of the imaging system 10, which would include HD image sensor 20, variable focus lens 30, and controller 40, with an analog output from the camera.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the claims as interpreted according to the principles of patent law, including the doctrine of equivalents.

## Claims

1. A vehicle comprising an imaging system (10), the imaging system (10) comprising:
an image sensor (20);
an electrowetting lens (30; 30a) positioned in front of the image sensor (20) and configured to change at least one optical characteristic in response to an electrical stimulus so as to change a field of view of the image sensor; and
a controller (40) coupled to the electrowetting lens (30; 30a) and configured to select a field of view (15c) of the image sensor (20) by selecting the electrical stimulus to be applied to the electrowetting lens (30; 30a),
the imaging system (10) **characterized in that** the imaging system (10) is an interior vision camera (10c) of the vehicle, wherein the controller (40) selects two different electrical stimuli so as to alternate the field of view of the image sensor (20) back and forth to obtain a first image stream with a first field of view and a second image stream with a second field of view,
wherein the controller (40) either supplies the first image stream to a first display (50a) and supplies the second image stream to a second display (50b), or supplies the first image stream and the second image stream to the first display (50a) to be displayed simultaneously in different display areas of the first display (50a),
wherein the interior vision camera (10c) is configured to capture images inside the vehicle and to display the first image stream and the second image stream to a driver or occupants of the vehicle, and
wherein a change in the field of view (15c) is effectuated by automatic control.

2. The vehicle of claim 1, wherein the controller (40) varies the electrical stimulus to be applied to the electrowetting lens (30; 30a) to thereby cause the field of view to be shifted.

3. The vehicle of any one of claims 1-2, wherein the controller (40) varies the electrical stimulus to be applied to the electrowetting lens (30; 30a) to thereby cause the field of view (15c) to be narrowed or widened.

4. The vehicle of any one of claims 1-3, wherein the electrical stimulus is at least one of an applied voltage and an electrical field gradient.

5. The vehicle of any one of claims 1-4, wherein the output from the image sensor is an analog format.

## Patentansprüche

1. Ein Fahrzeug, das ein Bildgebungssystem (10) umfasst, wobei das Bildgebungssystem (10) Folgendes umfasst:
einen Bildsensor (20);
eine Elektrobenetzungslinse (30; 30a), die vor dem Bildsensor (20) positioniert ist und dazu konfiguriert ist, mindestens eine optische Eigenschaft als Reaktion auf einen elektrischen Reiz zu ändern, um so ein Sichtfeld des Bildsensors zu ändern; und
eine Steuerung (40), die mit der Elektrobenetzungslinse (30; 30a) gekoppelt ist und konfiguriert ist, um ein Sichtfeld (15c) des Bildsensors (20) durch Auswahl des an die Elektrobenetzungslinse (30; 30a) anzulegenden elektrischen Stimulus auszuwählen,
wobei das Bildgebungssystem (10) **dadurch gekennzeichnet ist, dass**
das Bildgebungssystem (10) eine Innenraumkamera (10c) des Fahrzeugs ist, wobei die Steuerung (40) zwei verschiedene elektrische Stimuli auswählt, um das Sichtfeld des Bildsensors (20) abwechselnd hin- und herzubewegen, um einen ersten Bildstrom mit einem ersten Sichtfeld und einen zweiten Bildstrom mit einem zweiten Sichtfeld zu erhalten,
wobei die Steuerung (40) entweder den ersten Bildstrom an eine erste Anzeige (50a) und den zweiten Bildstrom an eine zweite Anzeige (50b) liefert oder den ersten Bildstrom und den zweiten Bildstrom an die erste Anzeige (50a) liefert, um sie gleichzeitig in verschiedenen Anzeigebereichen der ersten Anzeige (50a) anzuzeigen,
wobei die Innenraumkamera (10c) konfiguriert ist, um Bilder im Inneren des Fahrzeugs zu erfassen und den ersten Bildstrom und den zweiten Bildstrom einem Fahrer oder Insassen des Fahrzeugs anzuzeigen, und
wobei eine Änderung des Sichtfeldes (15c) durch automatische Steuerung bewirkt wird.

2. Das Fahrzeug nach Anspruch 1, wobei die Steuerung (40) den an die Elektrobenetzungslinse (30; 30a) anzulegenden elektrischen Reiz variiert, um dadurch zu bewirken, dass das Sichtfeld verschoben wird.

3. Das Fahrzeug nach irgendeinem der Ansprüche 1 bis 2, wobei die Steuerung (40) den an die Elektrobenetzungslinse (30; 30a) anzulegenden elektrischen Reiz variiert, um dadurch zu bewirken, dass das Sichtfeld (15c) verengt oder erweitert wird.

4. Das Fahrzeug nach irgendeinem der Ansprüche von 1 bis 3, wobei der elektrische Reiz mindestens einer von einer angelegten Spannung und einem elektrischen Feldgradienten ist.

5. Das Fahrzeug nach irgendeinem der Ansprüche von 1 bis 4, wobei die Ausgabe des Bildsensors ein analoges Format ist.

## Revendications

1. Un véhicule comprenant un système d'imagerie (10), le système d'imagerie (10) comprenant :
un capteur d'image (20) ;
une lentille à électromouillage (30 ; 30a) placée devant le capteur d'image (20) et configurée pour modifier au moins une caractéristique optique en réponse à un stimulus électrique de manière à modifier un champ de vision du capteur d'image ; et
un dispositif de commande (40) couplé à la lentille à électromouillage (30 ; 30a) et configuré pour sélectionner un champ de vision (15c) du capteur d'image (20) en sélectionnant le stimulus électrique à appliquer à la lentille à électromouillage (30 ; 30a),
le système d'imagerie (10) étant **caractérisé en ce que**
le système d'imagerie (10) est une caméra de vision intérieure (10c) du véhicule, sachant que le dispositif de commande (40) sélectionne deux stimuli électriques différents de manière à alterner le champ de vision du capteur d'image (20) en va-et-vient pour obtenir un premier flux d'images avec un premier champ de vision et un deuxième flux d'images avec un deuxième champ de vision,
sachant que le dispositif de commande (40) fournit soit le premier flux d'images à un premier écran (50a) et fournit le deuxième flux d'images à un deuxième écran (50b), ou fournit le premier flux d'images et le deuxième flux d'images au premier écran (50a) pour qu'ils soient affichés simultanément dans différentes zones d'affichage du premier écran (50a),
sachant que la caméra de vision intérieure (10c) est configurée pour capturer des images à l'intérieur du véhicule et pour afficher le premier flux d'images et le deuxième flux d'images à un conducteur ou à des occupants du véhicule, et
sachant qu'une modification du champ de vision (15c) est effectuée par une commande automatique.

2. Le véhicule d'après la revendication 1, sachant que le dispositif de commande (40) fait varier le stimulus électrique à appliquer à la lentille à électromouillage (30 ; 30a) pour provoquer ainsi le déplacement ou encore le décalage du champ de vision.

3. Le véhicule d'après l'une quelconque des revendications de 1 à 2, sachant que le dispositif de commande (40) fait varier le stimulus électrique à appliquer à la lentille à électromouillage (30 ; 30a) pour provoquer ainsi le rétrécissement ou l'élargissement du champ de vision (15c).

4. Le véhicule d'après l'une des revendications de 1 à 3, sachant que le stimulus électrique est au moins l'un parmi une tension appliquée et un gradient de champ électrique.

5. Le véhicule d'après l'une quelconque des revendications de 1 à 4, sachant que la sortie du capteur d'image est un format analogique.
